# EUROPÄISCHE PATENTSCHRIFT

(11) **EP 1 432 531 B1**
(45) Veröffentlichungstag und Bekanntmachung des Hinweises auf die Patenterteilung: **20.04.2005**
(21) Anmeldenummer: 03790728.4
(22) Anmeldetag: 21.08.2003
(51) Int. Cl.: B07C 3/14

(54) **VERFAHREN UND EINRICHTUNG ZUM LESEN VON SENDUNGS- ODER DOKUMENTENAUFSCHRIFTEN**
METHOD AND DEVICE FOR READING POSTAL ARTICLE INSCRIPTIONS OR DOCUMENT INSCRIPTIONS
PROCEDE ET DISPOSITIF DE LECTURE D'INSCRIPTIONS D'ENVOIS OU DE DOCUMENTS

(30) Priorität: 29.08.2002 DE 10240034
(43) Veröffentlichungstag der Anmeldung: 30.06.2004
(73) Patentinhaber: SIEMENS AKTIENGESELLSCHAFT, 80333 München (DE)
(72) Erfinder: ROSENBAUM, Walter, F-75116 Paris (FR); RAUH, Ingolf, 78479 Reichenau (DE); KRAUSE, Matthias, 78359 Orsingen-Nenzingen (DE)
(86) Internationale Anmeldenummer: PCT/DE2003/002796
(87) Internationale Veröffentlichungsnummer: WO 2004/020115

(56) Entgegenhaltungen:
- EP-A- 0 635 314
- DE-A- 19 624 977

## Beschreibung

Die Erfindung betrifft ein Verfahren und eine Einrichtung zum Lesen von Sendungs- oder Dokumentenaufschriften nach den Oberbegriffen der Ansprüche 1 und 7, wie z.B aus EP-A-0 635 314 oder DE-A- 196 24 977 bekannt.

Zum automatischen Verarbeiten, z.B. Sortieren, von Sendungen oder Dokumenten ist es notwendig, deren Aufschriften zu lesen. Nach dem Stand der Technik erfolgt z.B. bei Sendungen zuerst die Bildaufnahme der Sendungsoberfläche, bzw. die gezielte Bildaufnahme des Adressausschnittes einer Sendung. Die Bilddaten werden dann zu einem ersten OCR System zur Adresserkennung, ggfs. zu weiteren OCR Systemen zur alternativen Adresserkennung und zu einem Videokodiersystem, falls die vorgelagerten OCR Systeme die Adresse nicht erkennen und kodieren können, transferiert. Wenn die Adresse gelesen wurde, gibt das OCR- oder Videokodiersystem eine entsprechende Sortierinformation zur Sortiermaschine, damit diese die Sendung entsprechend sortieren kann. Die Sendung erhält hier einen Sortier- oder Identifikationskode (ID-Kode) aufgespritzt. Die Erkennung der Sortierinformation muss dabei nicht während des Sortiervorganges erfolgen (online) sondern kann über den ID-Kode auch zeitversetzt erfolgen (offline). Hierbei erhält der Brief zunächst einen eindeutigen ID-Kode, der später mit der erkannten Adressinformation in Verbindung gesetzt wird. Das OCR-und Videokodiersystem ist hierbei über LAN oder WAN Netzwerk an die Sortiermaschinen gekoppelt. Das ermöglicht auch den abgesetzten Betrieb eines Lese- und Videokodierzentrums, das für mehrere Maschinen und sogar mehrere Maschinenstandorte zuständig ist. Solche abgesetzten Lese- und Videokodierzentren sind heute schon im Betrieb, werden aber durchgängig vom jeweiligen Postdienst selbst betrieben. Bei stark schwankendem Sendungsaufkommen muss der Postdienst umfangreiche Leseausrüstungen bereitstellen, die nur zeitweise ausgelastet sind.

Der Erfindung liegt daher die Aufgabe zugrunde, ein Verfahren und eine Einrichtung zum Lesen von Sendungs- oder Dokumentenaufschriften zu schaffen, die den notwendigen Leseaufwand für die einzelnen Postdienste oder andere, entsprechende Leseprozesse einsetzende Dienste reduzieren.

Erfindungsgemäß wird die Aufgabe durch die Merkmale de Ansprüche 1 und 7 gelöst.
Dabei werden die Bilder mit den bildbegleitenden Daten der zu lesenden Sendungen oder Dokumente von verschiedenen Auftraggebern zugeführt. Zu jedem Auftraggeber (Postdienst oder anderer Dienst) werden Stammdaten recherchierbar gespeichert, die mindestens den Ursprung der Bilder, Umfang der vereinbarten Leseschritte und weiteren Leistungen als Leistungsarten und in einem Kostenmodell deren Kosten, bei Vereinbarung in Abhängigkeit von festgelegten Bildattributen enthalten. Vor jedem Leseprozess werden aus den bildbegleitenden Daten und den Stammdaten der jeweilige Auftraggeber und die jeweilige Leseaufgabe einschließlich der Bildattribute, die für die Kostenermittlung notwendig sind, ermittelt. Nach der Durchführung des Leseprozesses für jedes Bild werden der Auftraggeber, die Verarbeitungsinformationen zu den Leseschritten mit den Lese- und Verarbeitungsresultaten, die ermittelten Bildattribute und die bildbegleitenden Daten recherchierbar und sortierbar zeitbezogen abgespeichert. Mit den zu den durchgeführten Leseprozessen abgespeicherten Daten werden dann aus dem in den Stammdaten enthaltenen Kostenmodell die angefallenen Kosten ermittelt und sortierbar nach Leistungsarten des Kostenmodells und/oder nach Leistungszeiträumen abgespeichert und für jeden Auftraggeber nach festgelegten Sortierkriterien als Abrechnungen ausgegeben.
Für einen effizienteren Betrieb besteht dadurch für die Postdienste und anderen Dienste die Möglichkeit, die Lese- und Kodieraufgaben im Outsourcing zu betreiben. Hierbei werden in Zeiten unsicheren Sendungsaufkommens Fixkosten in variable Kosten umgewandelt und der Dienst profitiert automatisch von neuen technischen Entwicklungen auf dem Lese- und Kodiersektor und ist unabhängig von der Lebensdauer der hierfür eingesetzten Hard- und Software. Der Betreiber zentralisierter Lesefunktionen hingegen kann für mehrere Dienste und Kunden diesen Service betreiben und hierüber ebenfalls Einsparungseffekte erzielen. Es wird dem Betreiber ermöglicht, den Leseund Kodierbetrieb abhängig von dem abgeschlossenen Dienstleistungsauftrag, den bildbegleitenden Daten und der Qualität und Art der übermittelten Bilder zu erbringen, nachzuweisen und abzurechnen. Dabei kann die Dienstleistung für mehrere Dienste gleichzeitig erbracht werden, d.h. für verschiedene Bilddatenströme bei getrennter Abrechnung pro Dienst.

Vorteilhafte Ausgestaltungen der Erfindung sind in den Unteransprüchen dargelegt.

So ist es vorteilhaft, eine Priorisierung der in den Stammdaten enthaltenen Leistungsarten hinsichtlich der Abarbeitung einschließlich vereinbarter Abarbeitungszeitscheiben für die Auftraggeber untereinander durchzuführen. Dadurch kann unterschiedlichen Dienstleistungsvereinbarungen mit den verschiedenen Diensten/Auftraggebern und ihrer Wichtung Rechnung getragen werden.

Vorteilhaft ist es auch, wenn die gespeicherten Daten mit den Resultaten zu den durchgeführten Leistungsarten entsprechend in den Stammdaten festgelegter Auswertungen statistisch aufbereitet und für die festgelegten Zeiträume an die Auftraggeber als Reports ausgegeben werden.

Um den Ursprung der zu lesenden Bilder zu identifizieren, ist es von Vorteil, Kennungen der bilderzeugenden Einrichtungen in den bildbegleitenden Daten anzugeben, die wiederum den einzelnen Auftraggebern zugeordnet sind.

Vorteilhaft ist es auch, wenn die Bilder und die Leseresultate den Sendungen oder Dokumenten über Identifikationskennungen zugeordnet werden, die auf den Sendungen oder Dokumenten lesbar aufgebracht sind.
Die gelesenen Adressen der Sendungen werden vorteilhaft als mittels Adressverzeichnisse verifizierte Adresskodes ausgegeben.

Anschließend wird die Erfindung anhand der Zeichnungen in einem Ausführungsbeispiel näher erläutert. Dieses Beispiel bezieht sich auf das Lesen von Sendungsaufschriften im Rahmen von Sortier- und Verteilprozessen bei der Post, was aber keine Einschränkung bedeutet.

Dabei zeigen
- FIG 1: den Datenfluss zwischen einem der Postdienste mit Bildaufnahmegeräten und einer Leseeinrichtung mit OCR und Videokodiereinrichtung als Dienstleistungssystem,
- FIG 2: den Datenfluss zwischen einem der Postdienste mit Bildaufnahmegeräten und OCR und der Leseeinrichtung mit OCR und Videokodiereinrichtung als Dienstleistungssystem,
- FIG 3: die Schnittstelle zwischen einem Postdienst und der Leseeinrichtung,
- FIG 4: den Datenfluss und Prozessablauf innerhalb der Leseeinrichtung.

Das Verfahren erfordert die Datenspeicherung, -abfrage, -suche, -vergleich, -sortierung und andere Datenmanipulationen, welche durch die Nutzung eines Rechnersystems ermöglicht werden. Dieses kann durch Fachleute entsprechend programmiert werden. Ein Rechnersystem besteht hierbei aus einem oder mehreren Rechnern mit bekannten Komponenten, wie z.B. Speicher, Eingabeschnittstelle, Ausgabeschnittstelle, Prozessor, Software und Kommunikation. Mehrere Rechner können sich die Aufgabe durch eine entsprechende Vernetzung teilen. Das Netzwerk kann hierbei ein lokales LAN oder WAN sein.

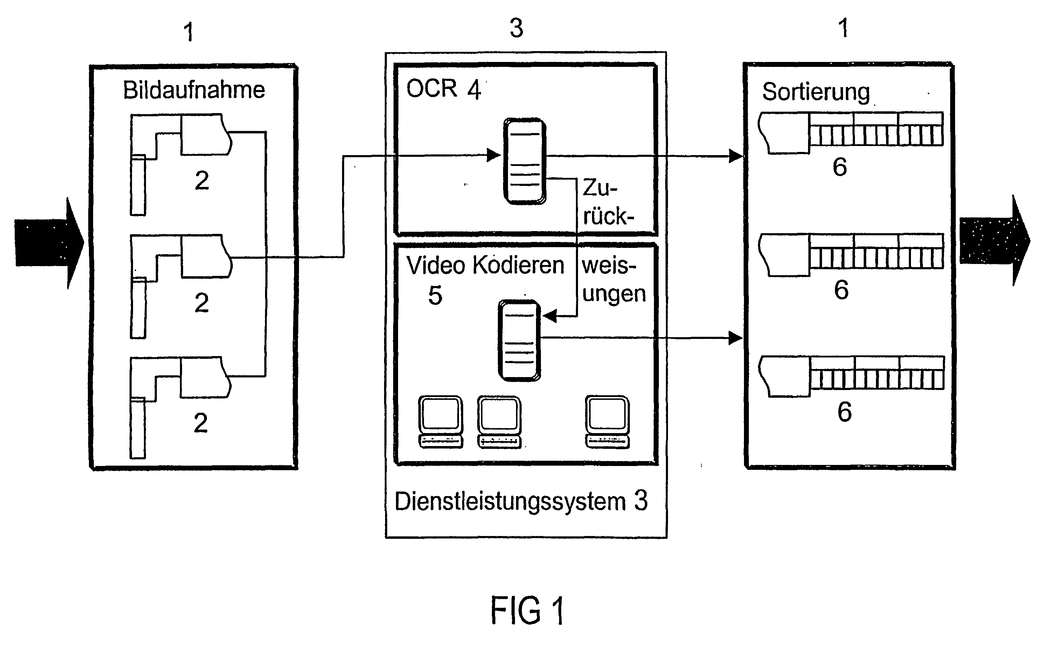

FIG 1 zeigt den Datenfluss eines Bildes mit zugehöriger Information. Das Bild wird von einem an einer Sortiermaschine befindlichen Bildaufnahmegerät 2 oder von einer Kamera beim Postdienst als Auftraggeber 1 generiert und dann via LAN oder WAN Verbindung zum Dienstleistungssystem 3 zum Lesen der Sendungsaufschriften übertragen, zusammen mit bildbegleitender Information. Im Dienstleistungssystem 3 wird die Aufschrift durch OCR Einrichtungen 4 und, falls diese kein eindeutiges Ergebnis liefern, mittels einer Videokodiereinrichtung 5 gelesen und das Ergebnis wird als Sortierinformation dem Postdienst als Auftraggeber 1 zum Zwecke der richtigen automatischen Sortierung zurückgegeben.

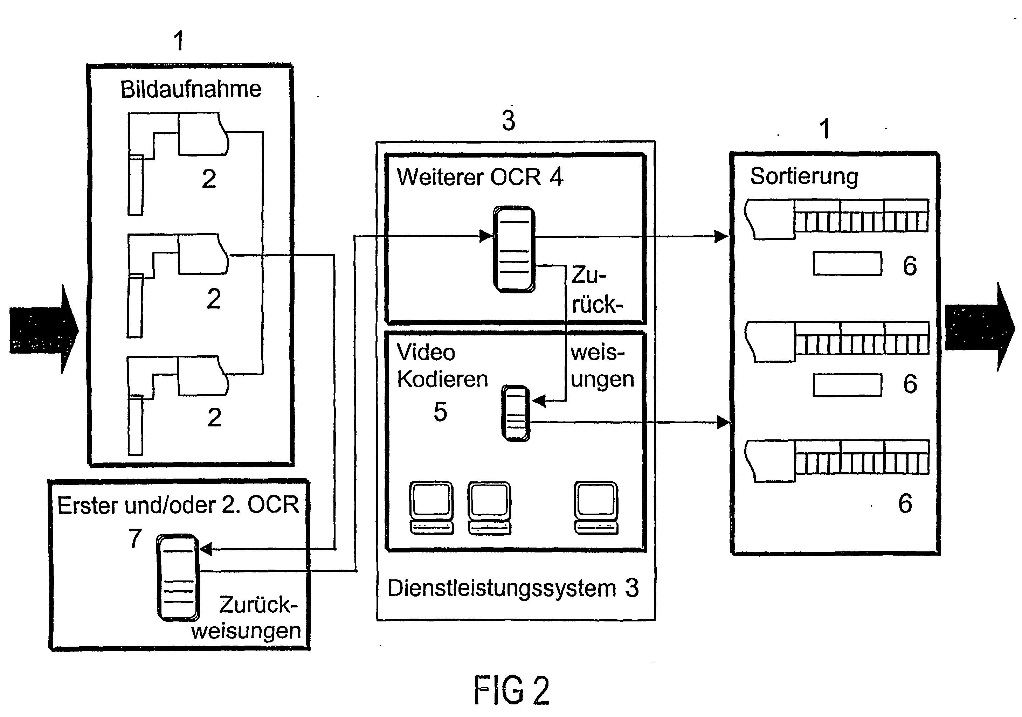

FIG 2 zeigt eine andere Möglichkeit, die darin besteht, dass die Dienstleistung auf das Lesen (OCR und Videokodieren) von Bildern reduziert wird, die die eigenen OCR Einrichtungen 7 des Postdienstes als Auftraggeber 1 nicht lesen konnten. Hierbei liest eine erste oder sogar zweite OCR Einrichtung 7 des Postdienstes als Auftraggeber 1 die Adresse oder andere Sendungsinformationen. Sollte hierbei kein Ergebnis gefunden werden, wird das Bild dem Dienstleistungssystem 3 übergeben. Eine hier installierte OCR Einrichtung 4 versucht nun mit alternativen Algorithmen das Bild zu lesen. Falls das nicht erfolgreich ist, wird das Bild videokodiert. Das Sortierergebnis wird dann wiederum dem Postdienst als Auftraggeber 1 für die Sortierung zurückgegeben.

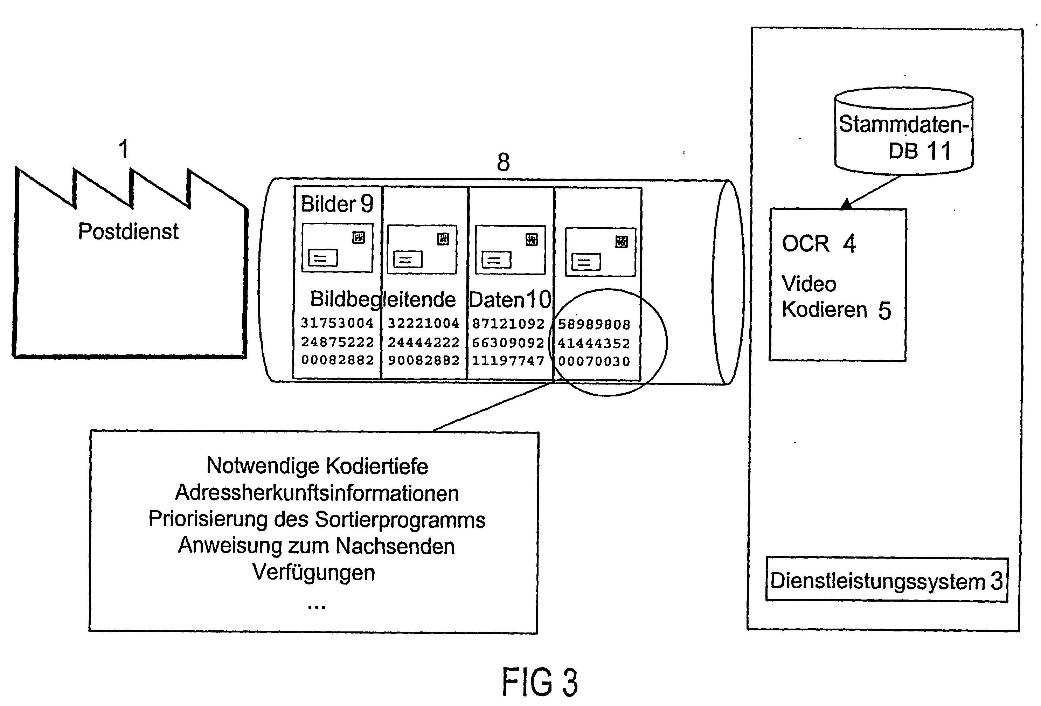

FIG 3 zeigt die Schnittstelle zwischen einem der Postdienste als Auftraggeber 1 und dem Dienstleistungssystem 3. Über die Schnittstelle verläuft dabei ein Datenprotokoll 8, welches sowohl Bilder 9 in typischen Bildkompressionsformaten (tiff, jpg, etc.) als auch bildbegleitende Daten 10 enthält. Hierbei kann das Protokoll so ausgelegt sein, dass die bildbegleitenden Daten 10 einmalig für mehrere Bilder 9 geltend übertragen werden, oder dass die bildbegleitenden Daten 10 pro Bild 9 übertragen werden, wie es die Zeichnung zeigt. Die bildbegleitenden Daten 10 können nun benutzt werden, um das Lesen mittels OCR Einrichtung 4 und Videokodiereinrichtung 5, basierend auf dem Dienstleistungsauftrag (Service Layer Agreement, SLA) optimal für die Dienstleistungsaufgabe zu betreiben. Eine weitere Möglichkeit besteht darin, dass der Postdienst als Auftraggeber 1 für einzelne Sendungen oder Sendungsmengen besondere Dienstleistungsfunktionen mit den bildbegleitenden Daten 10 bestellen kann, z.B. die automatische Rückgabe von Nachsendeinformationen als Sortierinformation. Die bildbegleitenden Daten 10 werden in Abstimmung mit dem Dienstleistungsauftrag für die Rechnungstellung an den Postdienst als Auftraggeber 1 herangezogen.
   Typische bildbegleitende Daten 10 bestehen aus Beschreibungen des Sortierumfeldes oder aus Zusatzaufträgen,
   wie z.B.:
   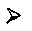 Eindeutige Nummer der versendenden Maschine/Bildaufnahmegerät des Postdienstes
   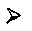 Nur Abgangssortierung/gelesener Postkode notwendig
   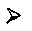 Abgangs- und Eingangssortierung/gesamte gelesene Adresse notwendig
   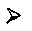 Zeitspanne bis zu der ein Sortierergebnis vorliegen muss
   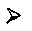 Sendungspriorität
   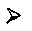 Automatische Nachsendebearbeitung
   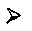 Etc.

Diese Daten werden typischerweise von einem Computersystem beim jeweiligen Postdienst erzeugt, z.B. von der ersten OCR Einrichtung 7 oder der Maschinensteuerung der Sortiermaschine.
Die bildbegleitenden Daten 10 zusammen mit im Dienstleistungssystem 3 in einer Stammdaten-Datenbank 11 hinterlegten Stammdaten 16 sowie die Informationen aus dem Bild 9 steuern den Ablauf des Dienstleistungsservices und bestimmen z.B., welche Kodieraufgaben in welcher Priorität notwendig sind. Stammdaten 16 sind hierbei typischerweise:
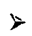 Zuordnungen von Maschinenkennung zu Postdiensten
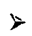 Zuordnung von Maschinenkennungen zu Sprachräumen (z.B. französisch, deutsch) im Land des Postdienstes (z.B. bei mehrsprachigen Ländern)
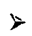 Umfang des Dienstleistungsauftrages
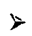 Geforderte Servicequalität
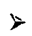 Maschinenkonfigurationen für die Weiterleitung von Ergebnissen (Offline Kodierung)
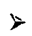 Priorisierung des Dienstleistungsauftrages gegenüber Dienstleistungsaufträgen von anderen Postdiensten.

Wird zum Beispiel ermittelt, dass die Sortiermaschine, die die Sendungsinformation mit Bild versendet, in einem französischsprachigen Teil eines Landes steht, so erhalten französischsprachige, geschulte Videokräfte die Bilder für die Erkennungsaufgabe aufgeschaltet. Sieht der Dienstleistungsvertrag keine getrennten Vergütungen für hoch priorisierte und gering priorisierte Sendungen vor, so findet trotz entsprechenden Hinweises in den bildbegleitenden Daten keine Bevorzugung von Sendungen statt.
Nach der Bearbeitung im Dienstleistungssystem 3 werden die bildbegleitenden Daten 10 zusammen mit den Stammdaten 16 für die Berechnung der Dienstleistungsgebühr und zum Nachweis der Dienstleistungsqualität genutzt.

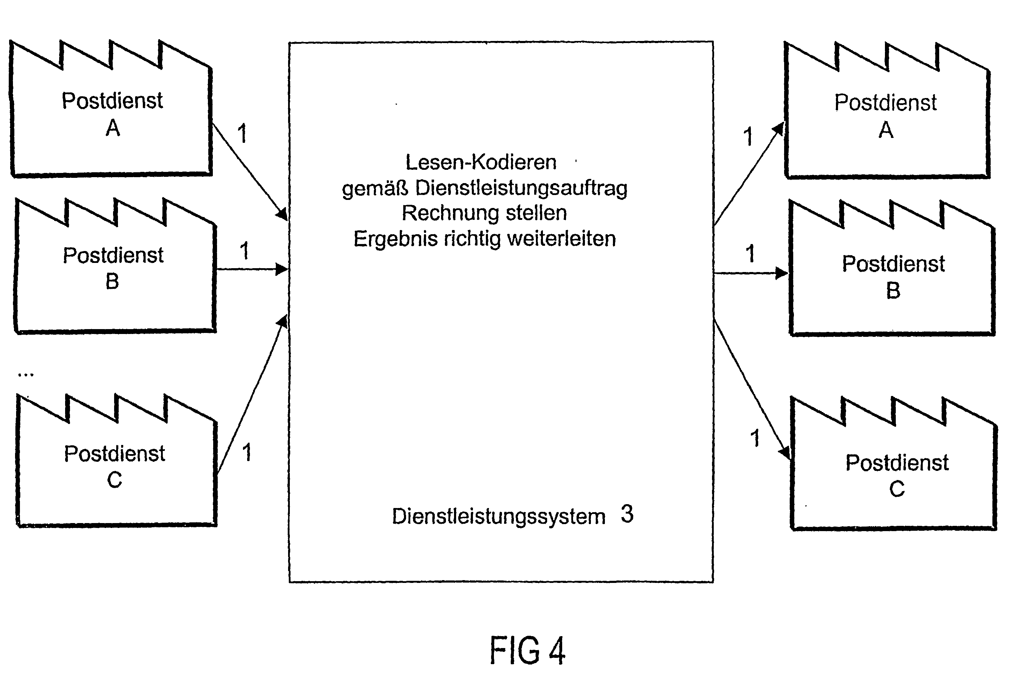

In FIG 4 ist ersichtlich, dass das Dienstleistungssystem 3 für die Leseprozesse für verschiedene Postdienste A, B, C als Auftraggeber 1 erbracht werden kann. Hierbei muss das Verfahren der Dienstleistung sicherstellen, dass die vom jeweiligen Postdienst 1 versandten Sendungsinformationen (Bilder 9 und bildbegleitende Daten 10) dazu führen, dass das Ergebnis wieder an den richtigen Auftraggeber 1 zurückgeführt wird.

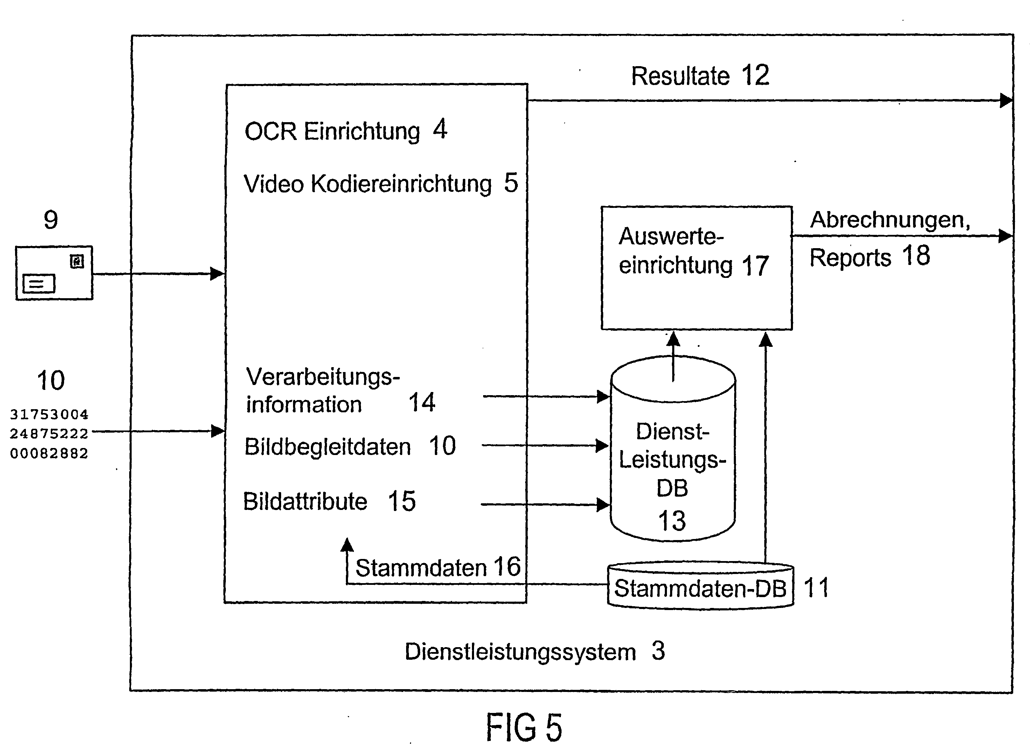

In FIG 5 wird im Detail der Datenfluss innerhalb des Dienstleistungssystems 3 aufgezeigt: Das Dienstleistungssystem 3 erhält alle Bilder 9 und bildbegleitende Daten 10 von einem oder parallel von mehreren Postdiensten als Auftraggeber 1. Die OCR-Einrichtung 4 und die Videokodiereinrichtung 5 verarbeiten die Bilder 9 gesteuert durch die bildbegleitenden Daten 10 und den dem Dienstleistungsauftrag zugrunde liegenden Stammdaten 16 aus der Stammdaten-Datenbank 11. Wie oben bereits beschrieben wird aufgrund der Daten der notwendige Lese- oder Kodierschritt aktiviert oder eine Priorisierung der Bearbeitung vorgenommen.
Das Lese- und Kodierresultat 12 wird in Form einer Sortierinformation/Adresskode oder in einer anderen Form des Leseergebnisses an den betreffenden Postdienst 1 zurückgegeben. Hierbei muss es sich nicht um dieselben Maschinen handeln, von denen die Bilder 9 und bildbegleitenden Daten 10 herkamen. Im Rahmen des oben beschriebenen offline-Kodierens können gesteuert durch die Stammdaten 16 der Stammdatendatenbank 11 die Lese- und Kodierresultate 12 auch an eine andere Sortiermaschine des Postdienstes als Auftraggeber 1 zurückgegeben werden. Sollte das Bild 9 nicht automatisch gelesen und videokodiert werden können (z.B. wenn kein Videokodierservice angeboten wird), kann als Resultat 12 auch das Bild 9 zurückgegeben werden, damit ggfs. der Postdienst seine eigenen Videokodierleute mit dem Lesen des Bildes beauftragen kann.
Die bildbegleitenden Daten 10 werden nach dem Leseprozess in eine Dienstleistungsdatenbank 13 eingetragen und dienen als Basis für eine Dokumentation und Abrechnung. In der Dienstleistungsdatenbank 13 können die Informationen wie folgt abgespeichert werden:
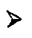 Anzahl der Briefe zu einem bildbegleitenden Datum
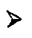 Eindeutige Brief Ids (Identifikationen) für das bildbegleitende Datum
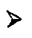 Mitgelieferter Auftrag (z.B. Nachsenden, Eingangscodieren, etc.)
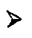 Hinweise für den Verarbeitungsprozess (Ergebnis des Postdienstleistungs- OCRs, Priorität der Sendungen im Postprozess, etc.)
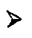 Kennung der liefernden Maschine
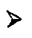 Zeitfenster für online oder offline Verarbeitung.

Ebenfalls werden Verarbeitungsinformationen 14 zu allen Lese-/Verarbeitungsschritten der Dienstleistungsdatenbank 13 zugeführt, die hierzu folgende Information aufweist:
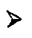 Name/Typ des Lese-/Verarbeitungsschrittes
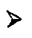 Anzahl der Bilder für diesen Lese-/Verarbeitungsschritt
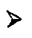 Datum / Zeit des Lese-/Verarbeitungsschrittes
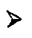 Optional: Dauer des Verarbeitungsschrittes
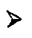 Ergebnis des Lese-/Verarbeitungsprozesses.

Lese-/Verarbeitungsschritte können sein:
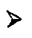 Entgegennahme der Daten
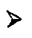 Abgangscodierung durch 2. OCR
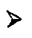 Eingangscodierung durch 2. OCR
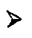 Abgangscodierung durch Interaktives Videokodieren nach Bestimmung der "Region of Interest" (Zone auf dem Bild, wo sich die Adressinformation befindet)
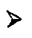 Eingangskodierung durch Interaktives Videokodieren nach Bestimmung des Postkodes (Postleitzahl)
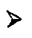 Eingangskodieren durch vollständige Videokodierung
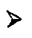 Nachsendekodierung durch 2. OCR
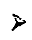 Etc.

Parallel zu den Verarbeitungsinformationen 14 erhält die Dienstleistungsdatenbank 13 auch Informationen über die jeweilige Bildeigenschaft und -qualität als sogenannte Bildattribute 15. Die Bildattribute 15 dienen ebenfalls dem Nachweis der Servicequalität und sind Grundlage für die Abrechnung. Typische Bildattribute 15 können sein:
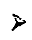 Handgeschriebene Adressen
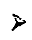 Maschinengeschriebene Adressen
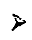 Dunkler Briefumschlag
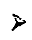 Fensterbriefumschlag
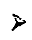 Prioritätsvermerk
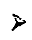 Elektronische Freimachung
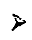 Briefmarke fehlt
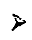 Umzugsadresse
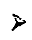 Unvollständige Adresse
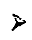 Etc.

Die Dienstleistungdatenbank 13 speichert die Informationen wie folgt ab:
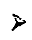 Eindeutige Kennung (Identifikationsnummer) der Sendung
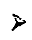 Eigenschaften für dieser Sendung.

Eine andere Möglichkeit der Ablage der Daten wäre:
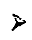 Eigenschaft einer Sendung
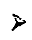 Zähler für die Anzahl der Sendungen mit dieser Eigenschaft.

Eine Auswerteeinrichtung 17 nutzt die Daten der Dienstleistungsdatenbank 13 für die Erstellung von Reports und Rechnungen 18. Hierfür greift sie auf die Stammdaten 16 der Stammdaten-Datenbank 11 zurück.
Anhand aller dort eingetragenen Maschinenkennungen eines Postdienstes als Auftraggeber 1 ermittelt sie aus den Verarbeitungsinformationen 14, den bildbegleitenden Daten 10 und den Sendungsattributen 15 den kompletten Umfang des erbrachten Services und gleicht sie mit dem vertraglich vereinbarten Dienstleistungsauftrag, gespeichert als Stammdaten 16 in der Stammdaten-Datenbank 11 ab. Alle erbrachten und nicht erbrachten Leistungen können nun gegenüber den geforderten Leistungen dokumentiert und z.B. in Form eines statistischen Auswertereports dargestellt werden.
Hierzu zählt z.B.
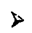 Tatsächliche Leserate und geforderte Leserate
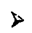 Tatsächliche Antwortzeit und geforderte Antwortzeit
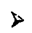 Tatsächliche Ausfallzeit und geforderte Ausfallzeit
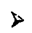 Tatsächliches Sendungsspektrum (Prozentuale Verteilung von Sendungsattributen pro 1000 oder mehr Sendungen) und vertraglich vereinbartes Sendungsspektrum als Dienstleistungsgrundlage
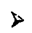 Tatsächliche Leserate pro Sendungsattribut und geforderte Leserate pro Sendungsattribut, etc.

Die Stammdaten-Datenbank 11 erhält darüber hinaus Informationen über vertraglich vereinbarte Entgelte für erbrachte Leistungen. Die erbrachten Leistungen sind durch die Verarbeitungsinformationen 14 zu den durchgeführten Lese-/Verarbeitungsschritten, Sendungsattribute 15 und Aufträge im Rahmen der bildbegleitenden Daten 10 definiert.
Diese Entgelte können in der folgenden Form in der Stammdaten-Datenbank 11 abgelegt sein:
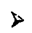 Kosten pro gelesenes Bild
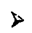 Kosten pro gelesene Handschriftadresse
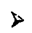 Kosten pro erkannte fehlende Briefmarke
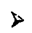 Kosten pro Bild, welches durch den 2. OCR und durch das Videocodiersystem bearbeitet wurde
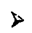 Kosten pro Bild, welches nur durch den 2. OCR bearbeitet wurde,
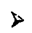 Kosten pro Nachsendeadresse
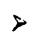 Kosten pro Bild, welches auf Abgang codiert wurde
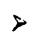 Kosten pro Bild, welches auf Eingang codiert wurde,
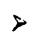 Oder Zuschlagssatz für abweichendes Sendungsspektrum.

Anhand der Stammdaten über vereinbarte Entgelte, den Informationen 14 zu den tatsächlich erfolgten Lese-/Verarbeitungsschritten, ermittelten Sendungsattributen 15 und übermittelten bildbegleitenden Daten (Auftragsdaten) 10 ermittelt die Auswerteeinrichtung 17 den Rechnungsbetrag für die erbrachte Dienstleistung pro Kunde, d.h. pro Postdienst 1. Es summiert hierbei über einen Zeitraum der Diensterbringung.
Sowohl die Reports über die Diensterbringung als auch die Abrechnung 18 kann dem jeweiligen Postdienst 1 in elektronischer oder physikalischer Form (durch Ausdruck) übermittelt werden.

Es ist festzustellen, dass der oben beschriebene detaillierte Ablauf im Rahmen der Erfindung variieren kann. Insbesondere muss das Ergebnis einer Lese- und Kodieraufgabe nicht nur ein Sortierresultat sein, vielmehr kann die Dienstleistung sich auch auf andere Merkmale einer Sendung (Briefmarkenerkennung, Absenderkennung, etc.) oder auf Bilder von Dokumenten außerhalb des postalischen Bereiches (Formulare, Unterschriften, etc.) beziehen. Auch die Organisation und Zusammensetzung der Datenbanken kann unter Beachtung von datenbanktechnischen Optimierungen von dem oben beschriebenen Beispiel abweichen. Diese Abweichung stellt den erfinderischen Kern des Systems, eine Leseaufgabe dienstleistungsgerecht zu erbringen, aber nicht in Frage.

## Patentansprüche

1. Verfahren zum Lesen von Sendungs- oder Dokumentenaufschriften, bei dem nach der jeweiligen Bildaufnahme der Sendungs- oder Dokumentenoberflächen ein- oder mehrstufige automatische Leseprozesse mit OCR-Einrichtungen (4) durchgeführt werden und, wenn die Ergebnisse nicht vollständig oder eindeutig sind, die Bilder (9) in mindestens einer Videokodiereinrichtung (5), bestehend aus mehreren Videokodierplätzen, welche die Bilder (9) über eine Verteileinrichtung erhalten, von Kodierkräften gelesen werden, wobei die Bilder (9) mit bildbegleitenden Daten (10) zur Abarbeitung der Leseaufgaben, zu Lesebedingungen und Zusatzaufgaben an die OCR-Einrichtungen (4) und/oder Videokodiereinrichtungen (5) übertragen werden,
**dadurch gekennzeichnet, dass**
- die Bilder (9) mit den bildbegleitenden Daten (10) der zu lesenden Sendungen oder Dokumente von verschiedenen Auftraggebern (1) zugeführt werden,
- zu jedem Auftraggeber (1) Stammdaten (16) recherchierbar gespeichert werden, die mindestens den Ursprung der Bilder (9), Umfang der vereinbarten Leseschritte und weiteren Leistungen als Leistungsarten und in einem Kostenmodell deren Kosten, bei Vereinbarung in Abhängigkeit von festgelegten Bildattributen (15) enthalten,
- vor jedem Leseprozess aus den bildbegleitenden Daten (10) und den Stammdaten (16) der jeweilige Auftraggeber (1) und die jeweilige Leseaufgabe einschließlich der Bildattribute (15), die für die Kostenermittlung notwendig sind, ermittelt werden,
- nach der Durchführung des Leseprozesses für jedes Bild (9) der Auftraggeber (1), die Verarbeitungsinformationen (14) zu den Leseschritten mit den Lese- und Verarbeitungsresultaten (12), die ermittelten Bildattribute (15) und die bildbegleitenden Daten (10) recherchierbar und sortierbar zeitbezogen abgespeichert werden,
- mit den zu den durchgeführten Leseprozessen abgespeicherten Daten aus dem in den Stammdaten (16) enthaltenen Kostenmodell die angefallenen Kosten ermittelt und sortierbar nach Leistungsarten des Kostenmodells und/oder nach Leistungszeiträumen abgespeichert werden und für jeden Auftraggeber (1) nach festgelegten Sortierkriterien als Abrechnungen (18) ausgegeben werden.

2. Verfahren nach Anspruch 1, **dadurch gekennzeichnet, dass** eine Priorisierung der in den Stammdaten (16) enthaltenen Leistungsarten hinsichtlich der Abarbeitung einschließlich vereinbarter Abarbeitungszeitscheiben für die Auftraggeber (1) untereinander durchgeführt wird.

3. Verfahren nach Anspruch 1, **dadurch gekennzeichnet, dass** die gespeicherten Daten mit den Resultaten zu den durchgeführten Leistungsarten entsprechend in den Stammdaten (16) festgelegter Auswertungen statistisch aufbereitet und für die festgelegten Zeiträume an die Auftraggeber (1) als Reports (18) ausgegeben werden.

4. Verfahren nach Anspruch 1, **dadurch gekennzeichnet, dass** als Ursprung der Bilder (9) Kennungen der bilderzeugenden Einrichtungen (2) in den bildbegleitenden Daten (10) angegeben werden, die wiederum den einzelnen Auftraggebern (1) zugeordnet sind.

5. Verfahren nach Anspruch 1, **dadurch gekennzeichnet, dass** die Bilder (9) und die Leseresultate (12) den Sendungen oder Dokumenten über Identifikationskennungen zugeordnet werden.

6. Verfahren nach Anspruch 1, **dadurch gekennzeichnet, dass** als Leseresultate (12) von Adressen mittels Adressverzeichnisse verifizierte Adresskodes ausgegeben werden.

7. Einrichtung zum Lesen von Sendungs- oder Dokumentenaufschriften mit Bildaufnahmeeinrichtungen (2) für die Sendungs- oder Dokumentenoberflächen, OCR Einrichtungen (4) und, wenn deren Ergebnisse nicht vollständig oder eindeutig sind, mindestens einer Videokodiereinrichtung (5), bestehend aus mehreren Videokodierplätzen, an welchen die nicht erfolgreich OCR-gelesenen und von einer Verteileinrichtung zugewiesenen Bilder (9) von Kodierkräften gelesen und kodiert werden, wobei die Bilder (9) mit bildbegleitenden Daten (10) zur Abarbeitung der Leseaufgaben, zu Lesebedingungen und Zusatzaufgaben an die OCR Einrichtungen (4) und/oder Videokodiereinrichtungen (5) übertragen werden, **dadurch gekennzeichnet, dass**
- die Bilder (9) mit den bildbegleitenden Daten (10) der zu lesenden Sendungen oder Dokumente von verschiedenen Auftraggebern (1) zuführbar sind,
- zu jedem Auftraggeber (1) Stammdaten (16) recherchierbar in einer Stammdaten-Datenbank (11) gespeichert sind, die mindestens den Ursprung der Bilder (9), Umfang der vereinbarten Lese- und Verarbeitungsschritte und weiteren Leistungen als Leistungsarten und in einem Kostenmodell deren Kosten, bei Vereinbarung in Abhängigkeit von festgelegten Bildattributen (15) enthalten,
- eine Auswerteeinrichtung (17) vorgesehen ist, die vor jedem Leseprozess aus den bildbegleitenden Daten (10) und den Stammdaten (16) den jeweiligen Auftraggeber (1) und die jeweilige Leseaufgabe einschließlich der Bildattribute (15), die für die Kostenermittlung notwendig sind, ermittelt,
- für jedes Bild (9) der Auftraggeber (1), die Verarbeitungsinformationen (14) zu den Lese- und Verarbeitungsschritten mit den Lese- und Verarbeitungsresultaten, die ermittelten Bildattribute (15) und die bildbegleitenden Daten (10) recherchierbar und sortierbar zeitbezogen in einer Dienstleistungsdatenbank (13) abgespeichert sind,
- mit den zu den durchgeführten Leseprozessen abgespeicherten Daten aus dem in der Stammdaten-Datenbank (11) enthaltenen Kostenmodell die angefallenen Kosten in der Auswerteeinrichtung (17) ermittelt und sortierbar nach Leistungsarten des Kostenmodells und/oder nach Leistungszeiträumen abgespeichert werden und für jeden Auftraggeber (1) nach festgelegten Sortierkriterien als Abrechnungen (18) ausgegeben werden.

8. Einrichtung nach Anspruch 7, **dadurch gekennzeichnet, dass** die Auswerteeinrichtung (17) so ausgebildet ist, dass die gespeicherten Daten mit den Resultaten zu den durchgeführten Leistungsarten entsprechend in den Stammdaten (16) festgelegter Auswertungen statistisch aufbereitet und für die festgelegten Zeiträume an die Auftraggeber (1) als Reports (18) ausgegeben werden.

## Claims

1. Method for reading postal article inscriptions or document inscriptions, in which single-stage or multistage automatic reading processes are carried out by means of OCR devices (4) after recording the respective image of the postal article or document surfaces, and, if the results are not complete or unique, the images (9) are read by coding forces in at least one video coding device (5), comprising two or more video coding stations, which receive the images (9) via a distribution device, with the images (9) being transmitted to the OCR devices (4) and/or to the video coding devices (5) together with data (10) accompanying the images, in order to carry out the reading tasks, with this data relating to reading conditions and additional tasks,
**characterized in that**
- the images (9) are supplied from different customers (1) together with the data (10) accompanying the images and relating to the postal articles or documents to be read,
- core data (16) relating to each customer (1) is stored such that it can be searched, and contains at least the source of the images (9), the scope of the agreed reading steps and further services as service types and, in a cost model their costs, on agreement as a function of defined image attributes (15),
- the respective customer (1) and the respective reading task including the image attributes (15) which are required for cost determination are determined before each reading process, from the data (10) accompanying the images, and from the core data (16),
- the customer (1), the processing information (14) relating to the reading steps together with the reading and processing results (12), the determined image attributes (15) and the data (10) accompanying the images are stored such that they can be searched and sorted on a time-related basis after carrying out the reading process for each image (9),
- the costs incurred are determined from the cost model contained in the core data (16) by means of the stored data relating to the reading processes carried out, and are stored such that they can be sorted on the basis of service types of the cost model and/or on the basis of service time periods, and are output as invoices (18) based on defined sorting criteria for each customer (1).

2. Method according to Claim 1, **characterized in that** the service types which are contained in the core data (16) are prioritized with regard to the processing including agreed processing time period for the customers (1).

3. Method according to Claim 1, **characterized in that** the stored data is processed statistically with the results from the service types carried out, corresponding to evaluations defined in the core data (16), and is output to the customers (1) as reports (18) for the defined time periods.

4. Method according to Claim 1, **characterized in that** tags of the image-producing devices (2) are included in the data (10) accompanying the images as the source of the images (9), which tags are in turn associated with the individual customers (1).

5. Method according to Claim 1, **characterized in that** the images (9) and the reading results (12) are associated with the postal articles or documents by means of identification tags.

6. Method according to Claim 1, **characterized in that** address codes which have been verified by means of address directories are output as reading results (12) of addresses.

7. Device for reading postal article inscriptions or document inscriptions by means of image recording devices (2) for the postal article or document surfaces, OCR devices (4) and, if their results are not complete or unique, at least one video coding device (5), comprising two or more video coding stations, at which the images (9) which have not been successfully OCR-read and are assigned by a distribution device are read and coded by coding forces, with the images (9) being transmitted to the OCR devices (4) and/or to the video coding devices (5) together with data (10) accompanying the images, in order to carry out the reading tasks, with this data relating to reading conditions and additional tasks, **characterized in that**
- the images (9) are supplied from different customers (1) together with the data (10) accompanying the images and relating to the postal articles or documents to be read,
- core data (16) relating to each customer (1) is stored in a core data databank (11) such that it can be searched, and contains at least the source of the images (9), the scope of the agreed reading and processing steps and further services as service types and, in a cost model their costs, on agreement as a function of defined image attributes (15),
- an evaluation device (17) is provided which determines the respective customer (1) and the respective reading task, including the image attributes (15) which are required for cost determination before each reading process, from the data (10) accompanying the images, and from the core data (16),
- the customer (1), the processing information (14) relating to the reading and processing steps together with the reading and processing results, the determined image attributes (15) and the data (10) accompanying the images are stored in a service databank (13) such that they can be searched and sorted on a time-related basis for each image (9),
- the costs incurred are determined in the evaluation device (17) from the cost model contained in the core data databank (11) by means of the stored data relating to the reading processes carried out, and are stored such that they can be sorted on the basis of service types of the cost model and/or on the basis of service time periods, and are output as invoices (18) based on defined sorting criteria for each customer (1).

8. Device according to Claim 7, **characterized in that** the evaluation device (17) is designed such that the stored data is processed statistically with the results from the service types carried out, corresponding to evaluations defined in the core data (16), and is output to the customers (1) as reports (18) for the defined time periods.

## Revendications

1. Procédé pour lire des inscriptions sur des envois ou sur des documents, selon lequel, après que les surfaces d'envois et de documents ont été photographiées, on réalise des opérations de lecture en une ou en plusieurs étapes à l'aide d'installations de ROC (4) et, si les résultats ne sont pas complets ou univoques, les images (9) sont lues par un personnel de codage dans au moins une installation de vidéocodage (5) composée de plusieurs postes de vidéocodage qui reçoivent les images (9) par l'intermédiaire d'une installation de distribution,
pour exécuter les opérations de lecture, des conditions de lecture et des travaux supplémentaires, les images (9) ainsi que les données jointes aux images (10) sont transmises aux installations de ROC (4) et/ou aux installations de vidéocodage (5),
**caractérisé en ce que**
- on achemine les images (9) ainsi que les données jointes aux images (10) liées aux envois ou aux documents à lire en provenance de différents clients (1),
- on mémorise pour chaque client (1) de façon recherchable des données permanentes (16) qui contiennent sous forme de types de prestation au moins l'origine des images (9), les étapes de lecture dans l'étendue qui a été convenue et d'autres prestations, ainsi que leur coût dans un modèle de coûts et s'il en a été convenu ainsi en fonction d'attributs d'image (15) déterminés,
- on détermine avant chaque opération de lecture, à partir des données jointes aux images (10) et des données permanentes (16), le client (1) concerné et le travail de lecture y compris les attributs d'image (15) nécessaires pour établir les coûts,
- après que l'opération de lecture a été exécutée pour chaque image (9), on enregistre de façon recherchable et triable en fonction du temps le client (1), les informations de traitement (14) pour les étapes de lecture ainsi que les résultats de la lecture et du traitement (12), les attributs d'image (15) déterminés et les données jointes aux images (10),
- à l'aide des données enregistrées pendant les opérations de lecture précédentes, les coûts engagés sont ensuite établis à partir du modèle de coûts contenu dans les données permanentes (16) et sont enregistrés de façon triable d'après des types de prestation établis dans le modèle de coûts et/ou d'après des périodes de prestation et sont édités sous forme de décompte (18) pour chaque client (1) d'après des critères de tri déterminés.

2. Procédé selon la revendication 1, **caractérisé en ce que** parmi les clients (1) on établit une priorité pour les types de prestation contenus dans les données permanentes (16) quant au traitement y compris les durées de traitement dont on a convenu.

3. Procédé selon la revendication 1, **caractérisé en ce que** les données mémorisées ainsi que les résultats concernant les types de prestation réalisés sont préparés statistiquement en fonction d'exploitations établies dans les données permanentes (16) et sont communiqués aux clients (1) pour les durées déterminées sous forme de comptes rendus (18).

4. Procédé selon la revendication 1, **caractérisé en ce que**, pour donner l'origine des images (9), des critères des installations (2) qui produisent les images sont indiqués dans les données jointes aux images (10), lesquelles sont à leur tour associées à chaque client (1), individuel.

5. Procédé selon la revendication 1, **caractérisé en ce que** les images (9) et les résultats de la lecture (12) sont associés aux envois ou aux documents au moyen de critères d'identification.

6. Procédé selon la revendication 1, **caractérisé en ce que** des codes d'adresse vérifiés à l'aide de répertoires d'adresses sont édités sous forme de résultats de lecture (12) des adresses.

7. Installation pour lire des inscriptions sur des envois ou sur des documents comportant des installations de prise de vue (2) pour les surfaces des envois ou des documents, des installations de ROC (4) et, si les résultats de ces dernières ne sont pas complets ou univoques, au moins une installation de vidéocodage (5) composée de plusieurs postes de vidéocodage sur lesquels le personnel de codage lit et code les images (9) qui n'ont pas été lues avec succès par le ROC et qui ont été attribuées par une installation de distribution,
les images (9) ainsi que les données jointes aux images (10) sont transmises aux installations de ROC (4) et/ou à des installations de vidéocodage (5) pour réaliser les opérations de lecture, les conditions de lecture et des opérations supplémentaires,
**caractérisée en ce que**
- il est possible d'acheminer les images (9) ainsi que les données jointes aux images (10) liées aux envois ou aux documents à lire en provenance de différents clients (1),
- pour chaque client (1) des données permanentes (16) sont mémorisées de façon recherchable dans une base de données " données permanentes " (11) qui indique au moins l'origine des images (9), l'étendue des étapes de lecture et de traitement dont on a convenu et d'autres prestations en tant que types de prestations et leurs coûts dans un modèle de coûts, et s'il en a été convenu ainsi en fonction d'attributs d'image (15) déterminés,
- on prévoit une installation d'exploitation (17) qui détermine avant chaque opération de lecture, à partir des données jointes aux images (10) et des données permanentes (16), le client (1) concerné et le travail de lecture y compris les attributs d'image (15) nécessaires pour établir les coûts,
- pour chaque image (9), on enregistre dans une base de données " services " (13) de façon recherchable et triable en fonction du temps le client (1), les informations de traitement (14) pour les étapes de lecture et de traitement ainsi que les résultats de la lecture et du traitement, les attributs d'image (15) établis et les données jointes aux images (10),
- à l'aide des données enregistrées pendant les opérations de lecture précédentes, les coûts en question sont ensuite établis dans l'installation d'exploitation (17) à partir du modèle de coûts contenu dans la base de données " données permanentes " (11) et sont enregistrés de façon triable d'après les types de prestation du modèle de coûts et/ou des durées de prestation et sont édités sous forme de décompte (18) pour chaque client (1) d'après des critères de tri déterminés.

8. Installation selon la revendication 7, **caractérisée en ce que** l'installation d'exploitation (17) est conçue de telle manière que les données mémorisées ainsi que les résultats liés aux types de prestations réalisés sont préparées statistiquement en fonction d'exploitations établies dans les données permanentes (16) et sont éditées pour les durées déterminées aux clients (1) sous forme de compte rendus (18).
